(19) Europäisches Patentamt
European Patent Office
Office européen des brevets

(11) **EP 3 605 820 B1**

(12) **FASCICULE DE BREVET EUROPEEN**

(45) Date de publication et mention de la délivrance du brevet:
**10.05.2023 Bulletin 2023/19**

(21) Numéro de dépôt: **19186951.0**

(22) Date de dépôt: **18.07.2019**

(51) Classification Internationale des Brevets (IPC):
**H02M 3/00** *(2006.01)* **H02M 3/335** *(2006.01)*
**H02M 3/28** *(2006.01)*

(52) Classification Coopérative des Brevets (CPC):
**H02M 3/33592; H02M 3/01; H02M 3/285;**
**H02M 3/33571; H02M 3/33584;** H02M 1/0043;
H02M 1/0058; H02M 3/1586; Y02B 70/10;
Y02T 10/70; Y02T 10/7072; Y02T 10/92;
Y02T 90/14

(54) **CONVERTISSEUR DE TENSION CONTINU-CONTINU A RESONANCE**

DC-DC RESONANZWANDLER

DC-DC RESONANT VOLTAGE CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2018 FR 1857150**

(43) Date de publication de la demande:
**05.02.2020 Bulletin 2020/06**

(73) Titulaire: **Valeo Siemens eAutomotive France SAS**
**95800 Cergy (FR)**

(72) Inventeur: **BOUCHEZ, Boris**
**3057 SOLBERGELVA (NO)**

(74) Mandataire: **Valeo Powertrain Systems**
**Service Propriété Intellectuelle**
**Immeuble le Delta**
**14, avenue des Béguines**
**95892 Cergy Pontoise (FR)**

(56) Documents cités:
**WO-A1-2017/049191 KR-B1- 101 377 124**
**US-A- 5 946 206 US-A1- 2012 163 035**
**US-A1- 2012 262 953 US-A1- 2014 368 175**

## Description

### DOMAINE TECHNIQUE ET OBJET DE L'INVENTION

De façon générale, l'invention concerne un convertisseur de tension continu-continu à résonance, notamment dans le domaine des systèmes électriques, plus particulièrement destinés à la recharge d'une batterie d'alimentation, notamment destinés à être embarqués dans un véhicule automobile, tel qu'un véhicule automobile à moteur électrique ou hybride.

Plus précisément, dans le contexte d'un véhicule électrique ou hybride comprenant une batterie d'alimentation basse tension pour l'alimentation d'équipements électriques du véhicule et une batterie d'alimentation haute tension pour participer à la propulsion du véhicule, il est connu qu'un chargeur embarqué, couramment désigné par l'homme du métier sous l'acronyme OBC pour « On Board Charger » en anglais, comprenant un convertisseur de tension continu-continu à résonance, soit utilisé pour la recharge de la batterie d'alimentation haute tension.

L'invention concerne ainsi un convertisseur de tension continu-continu à résonance ainsi qu'un chargeur électrique comprenant un tel convertisseur. Le chargeur électrique est en particulier embarqué dans un véhicule électrique ou hybride pour notamment permettre la charge électrique d'une batterie d'alimentation haute tension du véhicule et/ou la fourniture d'énergie électrique par ladite batterie d'alimentation haute tension vers l'extérieur du véhicule, par exemple à un réseau électrique, un équipement ou un immeuble.

### ETAT DE LA TECHNIQUE

Comme cela est connu, un véhicule automobile électrique ou hybride comprend un système de motorisation électrique, alimenté par une batterie d'alimentation haute tension via un réseau électrique embarqué haute tension, et une pluralité d'équipements électriques auxiliaires alimentés par une batterie d'alimentation basse tension via un réseau électrique embarqué basse tension. Ainsi, la batterie d'alimentation haute tension assure une fonction d'alimentation en énergie du système de motorisation électrique permettant la propulsion du véhicule. La batterie d'alimentation basse tension alimente des équipements électriques auxiliaires, tels que des calculateurs embarqués, des moteurs de lève-vitres, un système multimédia, etc. La batterie d'alimentation haute tension délivre typiquement une tension comprise entre 100 V et 900 V, de préférence entre 100 V et 500 V, tandis que la batterie d'alimentation basse tension délivre typiquement une tension de l'ordre de 12 V, 24 V ou 48 V. Ces deux batteries d'alimentation haute et basse tension doivent pouvoir être chargées.

La recharge en énergie électrique de la batterie d'alimentation haute tension est réalisée de manière connue en la connectant, via un réseau électrique haute tension continue du véhicule, à un réseau d'alimentation électrique externe, par exemple le réseau électrique alternatif domestique. A cette fin, la batterie d'alimentation haute tension est apte à être connectée au réseau d'alimentation électrique alternatif domestique, pour sa charge, via un chargeur électrique embarqué, désigné OBC.

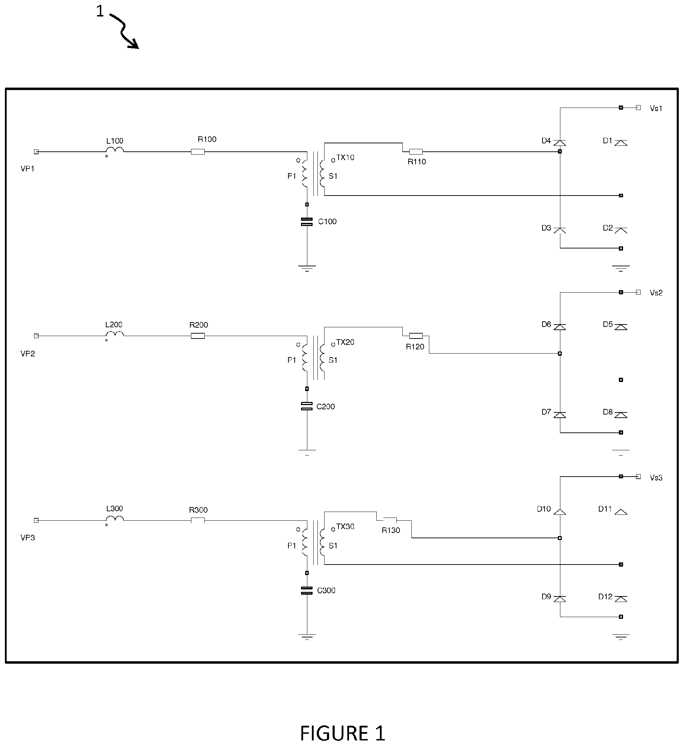

Dans une solution connue, un tel chargeur embarqué comprend principalement un circuit correcteur de facteur de puissance, appelé PFC (pour « Power Factor Correction » en anglais), et un convertisseur de tension continu-continu à résonance permettant notamment de réaliser l'isolation galvanique entre le réseau alternatif et le réseau continu. Dans une application de véhicule électrique ou hybride, il peut être nécessaire d'utiliser plusieurs convertisseurs de tension continu-continu afin de parvenir à produire la puissance nécessaire, par exemple en les connectant en parallèle. Cependant, un tel agencement peut nécessiter l'utilisation de filtres qui entrainent une surchauffe des composants. Une méthode connue pour remédier à cet inconvénient consiste à entrelacer les convertisseurs de tension continu-continu, comme cela est représenté à la figure 1 à titre d'exemple pour trois convertisseurs formant un ensemble 1 de convertisseurs. Un tel entrelacement permet de piloter les convertisseurs à une même fréquence.

Il existe plusieurs topologies de convertisseur de tension continu-continu à résonance. Parmi ces topologies, on distingue notamment les convertisseurs de type LLC. De tels convertisseurs comprennent de manière connue un transformateur, comprenant une partie primaire et une partie secondaire ; une capacité ; deux bobines ; et des interrupteurs qui sont commutés de façon à permettre la conversion d'une première tension continue délivrée à la partie primaire en une deuxième tension continue fournie par la partie secondaire. Afin de réduire les pertes par commutation des interrupteurs, il est connu d'ajouter une capacité en parallèle de chaque interrupteur, une telle configuration permettant un fonctionnement de commutation à tension nulle appelé « ZVS » (Zero-Voltage Switching) par l'homme du métier. Dans un circuit de type LC, dans lequel on note $L_r$ l'élément inductif, par exemple une bobine, et $C_r$ la capacité de résonance, le fonctionnement en ZVS ne peut pas être mis en oeuvre de manière permanente dans des applications hautes tensions. En effet, un tel fonctionnement en ZVS nécessite de stocker de l'énergie dans la bobine $L_r$. Or, à des valeurs de tensions de 400 V ou supérieures, à laquelle fonctionnent de tels convertisseurs de tension continu-continu à résonance dans les véhicules électriques ou hybrides de nos jours, l'énergie traversant les interrupteurs est telle qu'elle ne peut plus être entièrement stockée dans la bobine $L_r$, ce qui entraine des pertes par commutation au niveau des interrupteurs. Un circuit de type LLC permet de remédier en partie à ces inconvénients, car l'ajout d'un deuxième élément inductif, noté $L_m$, permet de stocker de l'énergie supplémentaire par rapport à un circuit de type LC. Cependant, lorsque le deuxième élément inductif est intégré dans la partie primaire du transformateur, le stockage d'énergie nécessite une configuration particulière du transformateur, ce dernier n'étant pas adapté à l'origine pour stocker de l'énergie. Aussi, afin de permettre à la partie primaire du transformateur de stocker de l'énergie, il est connu de réaliser un entrefer dans le noyau du transformateur, notamment dans la partie primaire. Ce faisant, cela rend le transformateur plus complexe et plus onéreux à fabriquer, augmente les perturbations électromagnétiques, et peut produire des effets de bord connus sous le nom de « fringing effects » par l'homme du métier pouvant entrainer des pertes thermiques.

Les documents suivants font partie de l'état de l'art de la présente demande: US2014/368175, US2012/163035, KR101377124, US2012/262953, WO2017/049191, US5946206.

Il existe donc le besoin d'une solution simple, fiable et efficace de chargeur électrique permettant de remédier au moins en partie à ces inconvénients.

## PRESENTATION GENERALE DE L'INVENTION

A cet effet, l'invention , qui est définie par la revendication indépendante 1, a tout d'abord pour objet un convertisseur de tension continu-continu à résonance, notamment pour véhicule électrique ou hybride, ledit convertisseur comprenant n circuits résonants principaux entrelacés, n étant un entier naturel supérieur ou égal à deux, et dans lequel :

- les circuits résonants principaux sont connectés en un même point neutre différent d'une masse du convertisseur,
- ledit point neutre étant relié à la masse du convertisseur par une impédance configurée pour stocker de l'énergie et permettre une commutation à tension nulle d'interrupteurs du convertisseur continu-continu à résonance.

Grâce à la dite impédance, le convertisseur de tension continu-continu à résonance peut stocker de l'énergie afin de mettre en oeuvre une commutation à tension nulle (ZVS) quel que soit le point de fonctionnement du convertisseur, c'est-à-dire quel que soit son couple tension d'entrée-tension de sortie. Le convertisseur de tension continu-continu à résonance peut ainsi fonctionner en ZVS indépendamment de la charge appliquée en sortie du convertisseur. Cette caractéristique est particulièrement adaptée au cas où les circuits résonants principaux sont de type LC, car elle permet de fonctionner en ZVS quel que soit le point de fonctionnement du convertisseur. L'impédance permet notamment un stockage d'énergie pour les courants dont les harmoniques sont multiples de rang n, où n est le nombre de circuits résonants principaux. Par point neutre, on entend notamment un noeud électrique auquel tous les circuits résonant principaux sont connectés. En particulier, ledit noeud électrique reçoit un courant électrique de chaque circuit résonant principal, ce courant déterminant une sortie du circuit résonant principal.

Selon une variante, ladite impédance comprend une inductance, notamment une inductance en série avec une capacité.

Selon une variante, ladite impédance forme un circuit résonant subsidiaire différent desdits circuits résonants principaux. Notamment, le circuit résonant subsidiaire forme un circuit de type LC, ou LLC, ou d'un autre type de circuit résonant. En particulier, ledit circuit résonant subsidiaire comprend une inductance en série avec une capacité, ou une inductance en parallèle avec une capacité. La fréquence de résonance du circuit résonant subsidiaire permet d'améliorer la commutation à zéro de tension à des plages de fonctionnement spécifiques du convertisseur de tension continu-continu.

Chaque circuit résonant principal comporte un transformateur comprenant au moins un enroulement primaire et au moins un enroulement secondaire, et ledit point neutre est connecté à une borne d'un enroulement du transformateur de chaque circuit résonant principal. En particulier, les transformateurs desdits circuits résonants principaux sont configurés pour transmettre une énergie entre une entrée et une sortie du convertisseur continu-continu à résonance. Notamment, la pluralité d'enroulements primaires est isolée galvaniquement de la pluralité d'enroulements secondaires afin de ne pas réaliser de liaison électrique entre les deux.

Un premier point neutre est connecté aux enroulements primaires des transformateurs de chaque circuit résonant principal. Autrement dit, les enroulements primaires desdits transformateurs, sont connectés ensemble au niveau d'un même point neutre appelé « premier point neutre » différent d'une masse du convertisseur. Notamment, le premier point neutre est différent d'une masse côté primaire ou d'une masse côté secondaire. Le premier point neutre est relié à la masse du convertisseur, notamment à la masse côté primaire, par une impédance configurée pour stocker de l'énergie et permettre une commutation à tension nulle d'interrupteurs du convertisseur continu-continu à résonance. Grâce à l'impédance connectée au premier point neutre, le convertisseur peut mettre en oeuvre des commutations à tension nulle pour des interrupteurs du convertisseur qui sont situés au côté primaire du convertisseur. En particulier, des branches comprenant chacune un desdits enroulements primaire des transformateurs sont reliées au niveau du premier point neutre.

Les circuits résonants principaux du convertisseur sont reliés chacun à une structure d'entrée respective comprenant au moins un interrupteur configuré pour contrôler une énergie circulant dans le circuit résonant principal, et l'impédance connectée au premier point neutre est configurée pour stocker de l'énergie et permettre une commutation à tension nulle des interrupteurs desdites structures d'entrée. En particulier, les structures d'entrées sont reliées au côté primaire du transformateur des circuits résonants principaux. Notamment, la structure d'entrée comporte une structure en demi-pont comprenant un interrupteur haut et un interrupteur bas reliés au niveau d'un point milieu, ledit point milieu étant connecté au circuit résonant principal respectif.

Un deuxième point neutre est connecté aux enroulements secondaires des transformateurs de chaque circuit résonant principal. Autrement dit, les enroulements secondaires desdits transformateurs, sont connectés ensemble au niveau d'un même point neutre appelé « deuxième point neutre » différent d'une masse du convertisseur. Notamment, le deuxième point neutre est différent d'une masse côté primaire ou d'une masse côté secondaire. Le deuxième point neutre est relié à la masse du convertisseur, notamment à la masse côté secondaire, par une impédance configurée pour stocker de l'énergie et permettre une commutation à tension nulle d'interrupteurs du convertisseur continu-continu à résonance. Grâce à l'impédance connectée au deuxième point neutre, le convertisseur peut mettre en oeuvre des commutations à tension nulle pour des interrupteurs du convertisseur qui sont situés au côté secondaire du convertisseur. En particulier, des branches comprenant chacune un desdits enroulements secondaires des transformateurs sont reliées au niveau du deuxième point neutre.

Les circuits résonants principaux du convertisseur sont reliés chacun à une structure de sortie respective comprenant au moins un interrupteur configuré pour contrôler une énergie circulant dans le circuit résonant principal, et l'impédance connectée au deuxième point neutre est configurée pour stocker de l'énergie et permettre une commutation à tension nulle des interrupteurs desdites structures de sortie. En particulier, les structures de sortie sont reliées au côté secondaire du transformateur, notamment aux enroulements secondaires, des circuits résonants principaux. Notamment, la structure de sortie comporte une structure en demi-pont comprenant un interrupteur haut et un interrupteur bas reliés au niveau d'un point milieu, ledit point milieu étant connecté au circuit résonant principal respectif.

Notamment le premier point neutre est différent du deuxième point neutre. En particulier, le premier point neutre est connecté uniquement aux enroulements primaires et/ou le second point neutre est connecté uniquement aux enroulements secondaires.

Selon une variante, chaque circuit résonant principal comprend au moins un premier élément inductif et une capacité de résonance reliée audit premier élément inductif, configurés pour résonner entre eux. Notamment, ledit premier élément inductif, la capacité de résonance et l'enroulement primaire du transformateur sont compris dans une branche du circuit de résonance principal, dite « branche de résonance ». En particulier, le premier point neutre est connecté aux branches de résonance des circuits résonants principaux.

Selon une variante, chaque circuit résonant principal est au moins de type LC.

Notamment, le transformateur de chaque circuit résonant principal comprend un deuxième élément inductif. Le deuxième élément inductif est notamment connecté en parallèle de l'enroulement primaire afin de former un circuit résonant principal de type LLC.

Selon un aspect de l'invention, les premiers éléments inductifs et/ou les deuxièmes éléments inductifs sont des bobines à induction.

L'invention concerne aussi un chargeur électrique, notamment pour véhicule électrique ou hybride, comprenant un convertisseur tel que présenté précédemment.

L'invention concerne aussi un véhicule électrique ou hybride comprenant un convertisseur de tension continu-continu tel que présenté précédemment.

## PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :

- la figure 1 représente un exemple de convertisseur continu-continu à résonance entrelacé de l'art antérieur,
- la figure 2 représente un exemple d'un convertisseur selon l'invention,
- les figures 3 à 5 représentent des exemples d'une impédance connectée au point neutre du convertisseur de la figure 2,

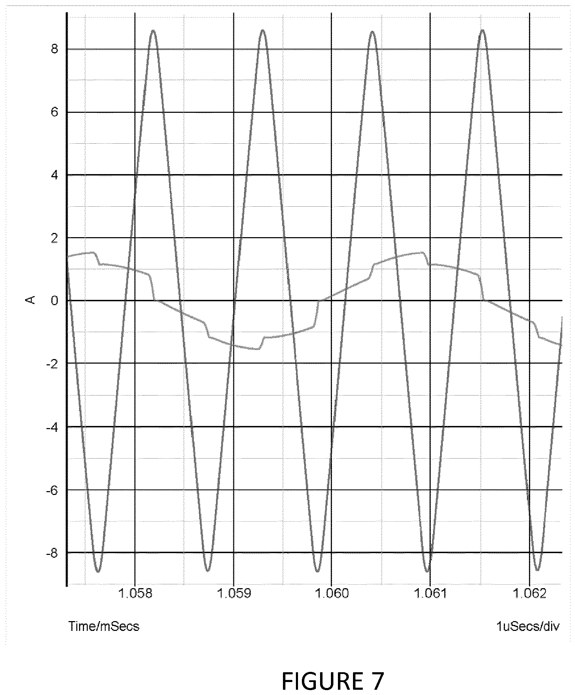

- les figures 6 et 7 illustrent des courants circulants dans le convertisseur de la figure 2.

Il faut noter que les figures exposent l'invention de manière détaillée pour mettre en oeuvre l'invention, lesdites figures pouvant bien entendu servir à mieux définir l'invention le cas échéant.

## DESCRIPTION DETAILLEE DE L'INVENTION

Dans la description qui sera faite ci-après, l'invention sera décrite dans son application à un véhicule automobile électrique ou hybride sans que cela ne soit limitatif de la portée de la présente invention.

Par exemple, un tel véhicule peut comprendre notamment une machine électrique, un onduleur, un ensemble de convertisseurs, une batterie d'alimentation haute tension, un réseau électrique embarqué haute tension, une batterie d'alimentation basse tension, un réseau électrique embarqué basse tension et une pluralité d'équipements électriques auxiliaires.

Le convertisseur selon l'invention est décrit ci-après dans sa mise en oeuvre pour un convertisseur DCDC embarqué dans le véhicule afin de convertir une tension entre les réseaux électriques basse et haute tension, sans toutefois que cela ne limite la portée de la présente invention. On notera ainsi que le convertisseur pourrait être compris dans un chargeur électrique, notamment embarqué dans un véhicule.

Le réseau électrique embarqué basse tension relie la batterie d'alimentation basse tension et la pluralité d'équipements électriques auxiliaires afin que la batterie d'alimentation basse tension alimente lesdits équipements électriques auxiliaires, tels que des calculateurs embarqués, des moteurs de lève-vitres, un système multimédia, etc. La batterie d'alimentation basse tension délivre typiquement par exemple une tension de l'ordre de 12 V, 24 V ou 48 V. La recharge de la batterie basse tension est réalisée à partir de la batterie haute tension via un convertisseur de tension continue en tension continue, appelé communément convertisseur continu-continu (DCDC).

Le réseau électrique embarqué haute tension relie la batterie d'alimentation haute tension et l'onduleur afin que la batterie d'alimentation haute tension assure une fonction d'alimentation en énergie de la machine électrique via l'onduleur. La batterie d'alimentation haute tension délivre typiquement une tension comprise entre 100 V et 900 V, de préférence entre 100 V et 500 V. La recharge en énergie électrique de la batterie d'alimentation haute tension est réalisée en la connectant, via le réseau électrique haute tension continue du véhicule, à un réseau électrique externe, par exemple le réseau électrique alternatif domestique.

La machine électrique est une machine électrique tournante, de préférence destinée à entrainer les roues du véhicule à partir de l'énergie fournie par la batterie d'alimentation haute-tension. Plus précisément, la machine électrique est une machine électrique à courant alternatif alimentée par une source de courants polyphasés. Par exemple, la machine électrique peut être un moteur à courant alternatif. Dans l'exemple préféré décrit ci-après, la machine électrique est alimentée par une source de courants triphasés sans que cela ne soit limitatif de la portée de la présente invention.

Dans cet exemple, la commande de la machine électrique est réalisée au moyen de l'onduleur. Ledit onduleur permet de convertir le courant continu fourni par la batterie d'alimentation haute tension en trois courants de commande alternatifs, par exemple sinusoïdaux. Autrement dit, l'onduleur a pour fonction de transformer le courant continu délivré par la batterie d'alimentation haute tension en trois courants de phase permettant de commander la machine électrique. A l'inverse, dans un autre mode de fonctionnement, la machine électrique peut également fournir trois courants alternatifs à l'onduleur afin que ledit onduleur les transforme en un courant continu permettant de charger la batterie d'alimentation haute-tension.

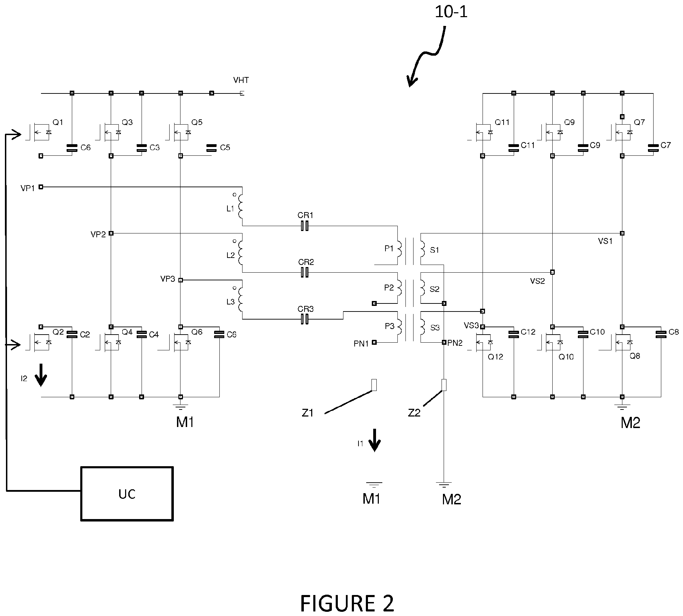

On a représenté en figure 2 un exemple d'un convertisseur électrique 10-1 selon l'invention.

Le convertisseur 10-1 est un convertisseur à résonance configuré pour convertir une tension continue en une tension continue et comprend trois circuits résonants dits « principaux ». Cependant, il pourrait comprendre un nombre différent de circuits résonants principaux.

Notamment, chaque circuit résonant principal comporte un transformateur, comprenant chacun au moins un enroulement primaire P1, P2, P3 et au moins un enroulement secondaire S1, S2, S3. Chaque circuit résonant principal comprend en outre une capacité de résonance CR1, CR2, CR3 et un premier élément inductif L1, L2, L3. L'enroulement primaire P1, P2, P3, la capacité de résonance CR1, CR2, CR3 et le premier élément inductif L1, L2, L3 sont par exemple compris dans une branche du circuit résonant principal dite « branche de résonance » et sont notamment en série. Par exemple, le premier élément inductif L1, L2, L3 peut être relié à une borne de la capacité de résonance CR1, CR2, CR3, l'autre borne de la capacité de résonance CR1, CR2, CR3 étant reliée à une borne de l'enroulement primaire P1, P2, P3 du transformateur, optionnellement via une résistance (non représentée). Chaque premier élément inductif L1, L2, L3 forme avec la capacité de résonance CR1, CR2, CR3 un circuit de résonance principal de type LC.

Les premiers éléments inductifs L1, L2, L3, sont de préférence des bobines à induction. Une isolation galvanique est réalisée entre les enroulements primaires P1, P2, P3 et les enroulements secondaires S1, S2, S3 des transformateurs des trois circuits résonants principaux. Une première masse M1 constitue un potentiel de référence du convertisseur 10-1 côté primaire, et une deuxième masse M2 constitue un potentiel de référence du convertisseur 10-1 côté secondaire.

Chaque circuit résonant principal peut être connecté à une structure d'entrée comportant des interrupteurs Q1-Q6 configurés pour contrôler une énergie circulant dans les circuits résonants principaux. En particulier, dans chaque structure d'entrée, les interrupteurs Q1 - Q6 sont agencés en demi-pont comprenant un interrupteur haut Q1, Q3, Q5 et un interrupteur bas Q2, Q4, Q6 reliés au niveau d'un point milieu. L'interrupteur haut Q1, Q3, Q5 est notamment connecté à un potentiel haut VHT d'un réseau électrique du véhicule, notamment du réseau haute tension du véhicule. L'interrupteur bas Q2, Q4, Q6 est notamment connecté à un potentiel bas d'un réseau électrique du véhicule, notamment du réseau haute tension du véhicule. Ce potentiel bas correspond notamment à la première masse M1. Le point milieu est relié au circuit résonnant principal correspondant, notamment à la branche de résonance comprenant l'enroulement primaire P1, P2, P3 du transformateur dudit circuit résonant principal. Les interrupteurs Q1-Q6 sont par exemple des transistors, notamment de type MOS. Des capacités C1-C6 sont connectées en parallèle des interrupteurs Q1-Q6 pour permettre des commutations ZVS des interrupteurs Q1-Q6.

Chaque circuit résonant principal peut être connecté à une structure de sortie comportant des interrupteurs Q7-Q12 configurés pour contrôler une énergie circulant dans les circuits résonants principaux. En particu-

9 **EP 3 605 820 B1** 10

lier, dans chaque structure de sortie, les interrupteurs Q7-Q12 sont agencés en demi-pont comprenant un interrupteur haut Q7, Q9, Q11 et un interrupteur bas Q8, Q10, Q12 reliés au niveau d'un point milieu. L'interrupteur haut Q7, Q9, Q11 est notamment connecté à un potentiel haut d'un réseau électrique du véhicule, notamment du réseau basse tension du véhicule. L'interrupteur bas Q8, Q10, Q12 est notamment connecté à un potentiel bas d'un réseau électrique du véhicule, notamment du réseau basse tension du véhicule. Ce potentiel bas correspond notamment à la deuxième masse M2. Le point milieu est relié au circuit résonnant principal correspondant, notamment à une branche comprenant l'enroulement secondaire S1, S2, S3 du transformateur dudit circuit résonant principal. Les interrupteurs Q7-Q12 sont par exemple des transistors, notamment de type MOS. Des capacités C7-C12 sont connectées en parallèle des interrupteurs Q7-Q12 pour permettre des commutations ZVS des interrupteurs Q7-Q12.

Le convertisseur 10-1 comprend notamment une unité de commande UC qui est configurée pour commander les interrupteurs Q1-Q12 du convertisseur.

De manière avantageuse, dans chaque circuit résonant principal, un deuxième élément inductif (non représenté) peut être ajouté en parallèle de l'enroulement secondaire S1, S2, S3 du transformateur dudit circuit résonant principal ou en parallèle de l'enroulement primaire P1, P2, P3 du transformateur dudit circuit résonant principal. Ce deuxième élément inductif est de préférence une bobine à induction. Ce deuxième élément inductif permet de réaliser, avec le premier élément inductif L1, L2, L3 et la capacité de résonance CR1, CR2, CR3, un circuit résonant principal de type LLC. On notera que, de manière alternative, le deuxième élément inductif peut être l'enroulement secondaire S1, S2, S3 du transformateur du circuit résonant principal lorsque ledit enroulement secondaire S1, S2, S3 présente une inductance magnétisante, ou l'enroulement primaire P1, P2, P3 du transformateur du circuit résonant principal lorsque ledit enroulement primaire P1, P2, P3 présente une inductance magnétisante. Une telle inductance magnétisante peut être réalisée par un entrefer dans le noyau du transformateur.

Les circuits résonants principaux sont tels que les enroulements primaires P1, P2, P3 sont reliés à un premier point dit « neutre » PN1 et les enroulements secondaires S1, S2, S3 sont reliés à un deuxième point dit « neutre » PN2.

Le premier point neutre PN1 est relié à la première masse M1 du convertisseur continu-continu via une première impédance Z1 configurée pour stocker de l'énergie et permettre une commutation à tension nulle des interrupteurs Q1-Q6 des structures d'entrée du convertisseur continu-continu à résonance 10-1. La première impédance Z1 permet de faire fonctionner le convertisseur 10-1 en ZVS quel que soit le point de fonctionnement du convertisseur 10-1, lorsque le convertisseur 10-1 transfère de l'énergie du primaire vers le secondaire.

re.

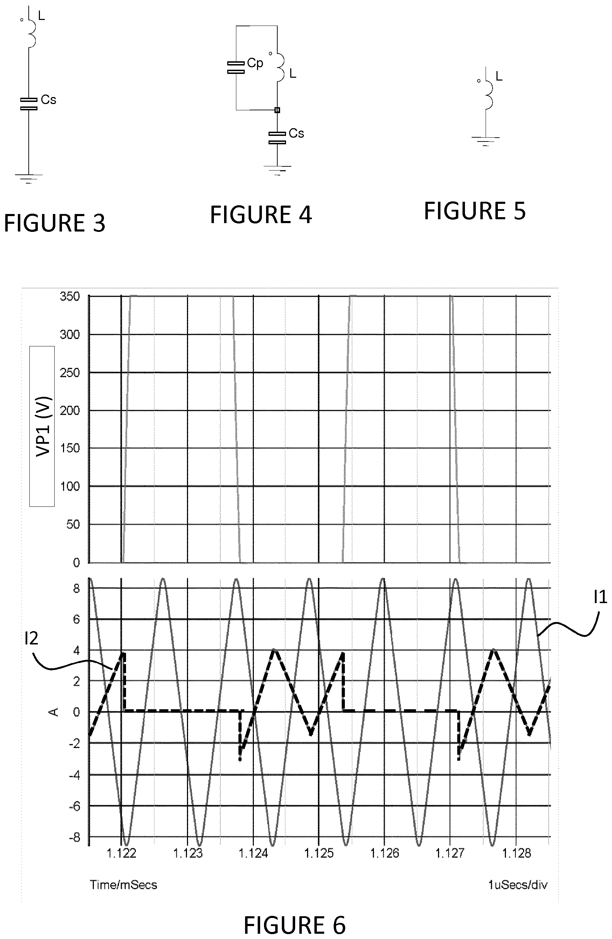

Ceci sera mieux compris en faisant référence à la figure 6 qui comprend un graphe représentant la tension VP1 en un point milieu P1 de la structure d'entrée du premier circuit résonant principal comprenant le premier élément inductif L1 et la capacité de résonance CR1. La figure 6 comprend également un graphe représentant le courant I2 (en traits interrompus) circulant dans le transistor bas Q2 du la structure d'entrée du premier circuit résonant principal et le courant I1 circulant dans une première impédance Z1 telle qu'illustrée en figure 3.

Pendant un fonctionnement du convertisseur 10-1, les interrupteurs Q1-Q6 des structures d'entrées commutent périodiquement de manière à transférer de l'énergie du côté primaire vers le côté secondaire. La première impédance Z1 reçoit un courant d'harmonique de rang 3. L'énergie $E_{ZVS}$ nécessaire à la décharge de la capacité C2 en parallèle de l'interrupteur bas Q2 est donnée par l'expression $E_{ZVS} = \frac{1}{2} \times C2 \times V^2$, où V est la tension d'entrée VHT. L'énergie $E_{Z1}$ stockée dans la première impédance Z1 est donnée par la relation $E_{Z1} = \frac{1}{2} \times L \times I1^2$, où L est l'inductance de la première impédance Z1, la capacité Cs étant négligée. Les mêmes relations sont obtenues avec les tensions VP2, VP3 des points milieux des deuxième et troisième circuits résonants principaux. La capacité Cs de l'impédance Z1 permet d'éviter une composante continue dans la tension aux bornes de l'inductance L de l'impédance Z1, qui autrement entrainerait une croissance du courant i2 vers l'infini. Pour une capacité C2 en parallèle du transistor bas Q2 donnée, en prenant une valeur maximale de la tension d'entrée VHT, et une valeur minimale pour le courant I2, on peut choisir une valeur d'inductance L qui permet de stocker l'énergie nécessaire à la commutation à tension nulle aux bornes de l'interrupteur bas Q2 de la structure d'entrée du premier circuit résonant principal, et plus généralement pour tous les interrupteurs des structures d'entrée. La première impédance Z1 permet un comportement similaire pour les autres interrupteurs Q1-Q6 des structures d'entrée. Ainsi, le courant i2 d'harmonique de rang 3 circulant dans la première impédance Z1, en particulier dans l'inductance L, permet de décharger la capacité C2-C6 en parallèle des interrupteurs Q1-Q6 des structures d'entrée. Ce qui permet d'ouvrir les interrupteurs Q1-Q6 à une tension nulle.

Ceci est particulièrement avantageux lorsque les circuits résonants principaux sont de type LC. En effet, un convertisseur entrelacé 1 de l'art antérieur comprenant des circuits résonants LC, tel que celui illustré en figure 1, ne permet pas de faire du ZVS sur toute la plage de fonctionnement du convertisseur 1. Suivant le point de fonctionnement, la résonance de l'élément inductif L100, L200, L300 avec la capacité de résonance C100, C200, C300 peut ne pas être suffisante pour stoc-

6

ker de l'énergie à cet effet. Dans le convertisseur 10-1 selon un exemple de l'invention, la première impédance Z1 est par contre toujours disponible pour stocker l'énergie nécessaire au ZVS.

Dans la figure 2, de manière similaire le deuxième point neutre PN2 est relié à la deuxième masse M2 du convertisseur continu-continu via une deuxième impédance Z2 configurée pour stocker de l'énergie et permettre une commutation à tension nulle des interrupteurs Q7-Q12 des structures de sortie du convertisseur continu-continu à résonance. La deuxième impédance Z1 permet de faire fonctionner le convertisseur 10-1 en ZVS quel que soit le point de fonctionnement du convertisseur 10-1, lorsque le convertisseur continu-continu à résonance transfère de l'énergie du secondaire vers le primaire. Ceci est particulièrement adapté lorsque le convertisseur de tension continu-continu à résonance 10-1 est destiné à échanger de l'énergie non seulement du primaire vers le secondaire, mais aussi du secondaire vers le primaire, c'est-à-dire lorsque le convertisseur de tension continu-continu à résonance est destiné à fonctionner de façon bidirectionnelle.

Cependant, le convertisseur 10-1 pourrait être unidirectionnel, et par exemple permettre seulement un échange d'énergie du primaire vers le secondaire. Le convertisseur 10-1 est alors dépourvu de structures de sortie telles que décrites précédemment, mais peut comprendre des diodes remplaçant les interrupteurs. Le convertisseur 10-1 peut être alors dépourvu de la deuxième impédance Z2, voire même du deuxième point neutre PN2. Les structures de sortie peuvent alors être similaires à celles du convertisseur de la figure 1.

Les première et deuxième impédances Z1, Z2 peuvent être des circuits résonants dits « subsidiaires », par exemple tels qu'illustrés en figures 3 et 4. En particulier, l'impédance Z1, Z2 peut comprendre une inductance L en série avec une capacité Cs, comme en figure 3 par exemple. L'impédance Z1, Z2 peut comprendre une inductance L en parallèle avec une capacité $C_P$, qui viennent en série avec une capacité Cs, comme en figure 4 par exemple. Avantageusement, lorsque l'impédance Z1, Z2 est un circuit résonant subsidiaire, on peut modifier le comportement de l'impédance Z1, Z2 avec la fréquence à laquelle commutent les interrupteurs des structures d'entrée ou de sortie. Ce qui permet par exemple d'obtenir plus ou moins des courants de plus ou moins grandes intensités dans le convertisseur en fonction des points de fonctionnement. Cependant, l'impédance Z1, Z2 peut être de tout type permettant de stocker de l'énergie en vue de faire de la commutation à tenson nulle, par exemple une inductance L comme illustré en figure 5.

**Revendications**

1. Convertisseur (10-1) de tension continu-continu à résonance, notamment pour véhicule électrique ou hybride, le convertisseur (10-1) étant configuré pour transférer de l'énergie électrique entre un réseau électrique haute tension du véhicule et un réseau électrique basse tension du véhicule, le réseau électrique haute tension et le réseau électrique basse tension délivrant une tension définie entre un potentiel haut et un potentiel bas respectif du réseau électrique haute tension et du réseau électrique basse tension, ledit convertisseur (10-1) comprenant n circuits résonants principaux entrelacés, n étant un entier naturel supérieur ou égal à deux,

   chaque circuit résonant principal étant connecté à une structure d'entrée comportant des interrupteurs (Q1-Q6) configurés pour contrôler une énergie circulant dans les circuits résonants principaux, les interrupteurs (Q1-Q6) étant agencés en n demi-ponts comprenant chacun un interrupteur haut (Q1, Q3, Q5) et un interrupteur bas (Q2, Q4, Q6) reliés au niveau d'un point milieu, l'interrupteur haut (Q1, Q3, Q5) étant connecté au potentiel haut du réseau électrique haute tension du véhicule et l'interrupteur bas (Q2, Q4, Q6) étant connecté au potentiel bas du réseau électrique haute tension du véhicule, chaque circuit résonant principal étant connecté à une structure de sortie comportant des interrupteurs (Q7-Q12) configurés pour contrôler une énergie circulant dans les circuits résonants principaux, les interrupteurs (Q7-Q12) étant agencés en n demi-ponts comprenant chacun un interrupteur haut (Q7, Q9, Q11) et un interrupteur bas (Q8, Q10, Q12) reliés au niveau d'un point milieu, l'interrupteur haut (Q7, Q9, Q11) étant connecté au potentiel haut du réseau électrique basse tension du véhicule et l'interrupteur bas (Q8, Q10, Q12) étant connecté au potentiel bas du réseau électrique basse tension du véhicule, chaque circuit résonant principal étant connecté à un demi-pont de la structure d'entrée et à un demi-pont de la structure de sortie, le convertisseur étant configuré de sorte que :

   - les circuits résonants principaux comprennent chacun un transformateur ainsi que des éléments électroniques (L1, L2, L3, CR1, CR2, CR3), le transformateur de chaque circuit résonant principal comprenant au moins un enroulement primaire (P1, P2, P3) et au moins un enroulement secondaire (S1, S2, S3), et dans lequel un point neutre (PN1, PN2) est connecté à une borne d'un enroulement du transformateur de chaque circuit résonant principal,

   l'au moins enroulement primaire (P1, P2, P3) des circuits résonants principaux étant connectés ensemble en un premier point neutre (PN1) différent d'une première masse (M1) correspondant au potentiel bas du réseau électrique haute tension,

l'au moins enroulement secondaire (S1, S2, S3) des circuits résonants principaux étant connectés ensemble en un deuxième point neutre (PN2) différent d'une deuxième masse (M2) correspondant au potentiel bas du réseau électrique basse tension, le deuxième point neutre (PN2) étant différent du premier point neutre (PN1),

- ledit premier point neutre (PN1) étant relié uniquement à la première masse (M1) du convertisseur directement et via seulement une première impédance (Z1) configurée pour stocker l'énergie nécessaire à une commutation à tension nulle d'interrupteurs du convertisseur continu-continu à résonance, ladite première impédance (Z1) étant différente desdits éléments électroniques des circuits résonants principaux configurés pour résonner entre lesdits éléments électroniques,
- ledit deuxième point neutre (PN2) étant relié uniquement à la deuxième masse (M2) du convertisseur directement et via seulement une deuxième impédance (Z2) configurée pour stocker l'énergie nécessaire à une commutation à tension nulle d'interrupteurs (Q7-Q12) du convertisseur continu-continu à résonance, ladite deuxième impédance (Z2) étant différente desdits éléments électroniques des circuits résonants principaux configurés pour résonner entre lesdits éléments électroniques.

2. Convertisseur selon la revendication 1, dans lequel lesdites impédances (Z1, Z2) comprennent une inductance.

3. Convertisseur (10-1) selon l'une quelconque des revendications 1 ou 2, dans lequel lesdites impédances (Z1, Z2) participent à former un circuit résonant subsidiaire différent desdits circuits résonants principaux.

4. Convertisseur (10-1) selon la revendication précédente, dans lequel les circuits résonants principaux du convertisseur (10-1) sont reliés chacun à une structure d'entrée respective comprenant au moins un interrupteur configuré pour contrôler une énergie circulant dans le circuit résonant principal, la première impédance (Z1) connectée au premier point neutre (PN1) étant configurée pour stocker de l'énergie et permettre une commutation à tension nulle des interrupteurs desdites structures d'entrée.

5. Convertisseur (10-1) selon la revendication précédente, dans lequel les circuits résonants principaux du convertisseur (10-1) sont reliés chacun à une structure de sortie respective comprenant au moins un interrupteur configuré pour contrôler une énergie circulant dans ledit circuit résonant principal, la deuxième impédance (Z2) connectée au deuxième point neutre (PN2) étant configurée pour stocker de l'énergie et permettre une commutation à tension nulle des interrupteurs desdites structures de sortie.

6. Convertisseur (10-1) de tension continu-continu à résonance, selon l'une des revendications précédentes, dans lequel lesdits éléments électroniques (L1, L2, L3, CR1, CR2, CR3) de chaque circuit résonant principal comprennent au moins un premier élément inductif (L1, L2, L3), une capacité de résonance (CR1, CR2, CR3) reliée audit premier élément inductif (L1, L2, L3), configurés pour résonner entre eux.

**Patentansprüche**

1. Resonanz-Gleichspannungswandler (10-1) insbesondere für ein Elektro- oder Hybridfahrzeug, wobei der Wandler (10-1) dazu ausgebildet ist, elektrische Energie zwischen einem Hochspannungsstromnetz des Fahrzeugs und einem Niederspannungsstromnetz des Fahrzeugs zu übertragen, wobei das Hochspannungsstromnetz und das Niederspannungsstromnetz eine Spannung liefern, die zwischen einem hohen Potential und einem jeweiligen niedrigen Potential des Hochspannungsstromnetzes und des Niederspannungsstromnetzes festgelegt ist, wobei der Wandler (10-1) n verschachtelte Hauptresonanzkreise umfasst, wobei n eine natürliche Zahl größer als oder gleich zwei ist,

wobei jeder Hauptresonanzkreis an eine Eingangsstruktur angeschlossen ist, die Schalter (Q1-Q6) aufweist, die dazu ausgebildet sind, eine Energie zu steuern, die in den Hauptresonanzkreisen strömt, wobei die Schalter (Q1-Q6) in n Halbbrücken angeordnet sind, die jeweils einen oberen Schalter (Q1, Q3, Q5) und einen unteren Schalter (Q2, Q4, Q6) umfassen, die an einem Mittelpunkt verbunden sind, wobei der obere Schalter (Q1, Q3, Q5) an das hohe Potential des Hochspannungsstromnetzes des Fahrzeugs angeschlossen ist und der untere Schalter (Q2, Q4, Q6) an das niedrige Potential des Hochspannungsstromnetzes des Fahrzeugs angeschlossen ist,
wobei jeder Hauptresonanzkreis an eine Ausgangsstruktur angeschlossen ist, die Schalter (Q7-Q12) aufweist, die dazu ausgebildet sind, eine Energie zu steuern, die in den Hauptresonanzkreisen strömt, wobei die Schalter (Q7-Q12) in n Halbbrücken angeordnet sind, die jeweils einen oberen Schalter (Q7, Q9, Q11) und einen unteren Schalter (Q8, Q10, Q12) umfassen, die an einem Mittelpunkt verbunden sind, wobei der obere Schalter (Q7, Q9, Q11) an das hohe Potential des Niederspannungsstromnetzes des Fahrzeugs angeschlossen ist und der untere Schalter (Q8, Q10, Q12) an das niedrige Potential des Niederspannungsstromnetzes des Fahrzeugs angeschlossen ist, wobei jeder Hauptresonanzkreis an eine Halbbrücke der Eingangsstruktur und an eine Halbbrücke der Ausgangsstruktur angeschlossen ist, wobei der Wandler so ausgebildet ist, dass:

- die Hauptresonanzkreise jeweils einen Transformator sowie elektronische Elemente (L1, L2, L3, CR1, CR2, CR3) umfassen, wobei der Transformator jedes Hauptresonanzkreises wenigstens eine Primärwicklung (P1, P2, P3) und wenigstens eine Sekundärwicklung (S1, S2, S3) umfasst, und wobei ein Neutralpunkt (PN1, PN2) an einen Anschluss einer Wicklung des Transformators jedes Hauptresonanzkreises angeschlossen ist,

wobei die wenigstens Primärwicklung (P1, P2, P3) der Hauptresonanzkreise an einem ersten Neutralpunkt (PN1) zusammen verbunden sind, der von einer ersten Masse (M1) verschieden ist, die dem niedrigen Potential des Hochspannungsstromnetzes entspricht, wobei die wenigstens Sekundärwicklung (S1, S2, S3) der Hauptresonanzkreise an einem zweiten Neutralpunkt (PN2) zusammen verbunden sind, der von einer zweiten Masse (M2) verschieden ist, die dem niedrigen Potential des Niederspannungsstromnetzes entspricht, wobei der zweite Neutralpunkt (PN2) vom ersten Neutralpunkt (PN1) verschieden ist,

- wobei der erste Neutralpunkt (PN1) nur mit der ersten Masse (M1) des Wandlers direkt und über nur eine erste Impedanz (Z1) verbunden ist, die dazu ausgebildet ist, die Energie zu speichern, die für eine Umschaltung bei Nullspannung von Schaltern des Resonanz-Gleichspannungswandlers erforderlich ist, wobei die erste Impedanz (Z1) von den elektronischen Elementen der Hauptresonanzkreise verschieden ist, die dazu ausgebildet sind, zwischen den elektronischen Elementen in Resonanz zu stehen,
- wobei der zweite Neutralpunkt (PN2) nur mit der zweiten Masse (M2) des Wandlers direkt und über nur eine zweite Impedanz (Z2) verbunden ist, die dazu ausgebildet ist, die Energie zu speichern, die für eine Umschaltung bei Nullspannung von Schaltern (Q7-Q12) des Resonanz-Gleichspannungswandlers erforderlich ist, wobei die zweite Impedanz (Z2) von den elektronischen Elementen der Hauptresonanzkreise verschieden ist, die dazu ausgebildet sind, zwischen den elektronischen Elementen in Resonanz zu stehen.

2. Wandler nach Anspruch 1, wobei die Impedanzen (Z1, Z2) eine Induktivität umfassen.

3. Wandler (10-1) nach einem der Ansprüche 1 oder 2, wobei die Impedanzen (Z1, Z2) dazu beitragen, einen Zusatzschwingkreis zu bilden, der von den Hauptschwingkreisen verschieden ist.

4. Wandler (10-1) nach dem vorhergehenden Anspruch, wobei die Hauptschwingkreise des Wandlers (10-1) jeweils mit einer jeweiligen Eingangsstruktur verbunden sind, die wenigstens einen Schalter umfasst, der dazu ausgebildet ist, eine Energie zu steuern, die im Hauptschwingkreis strömt, wobei die erste Impedanz (Z1), die an den ersten Neutralpunkt (PN1) angeschlossen ist, dazu ausgebildet ist, Energie zu speichern und eine Umschaltung bei Nullspannung der Schalter der Eingangsstrukturen zu ermöglichen.

5. Wandler (10-1) nach dem vorhergehenden Anspruch, wobei die Hauptresonanzkreise des Wandlers (10-1) jeweils mit einer jeweiligen Ausgangsstruktur verbunden sind, die wenigstens einen Schalter umfasst, der dazu ausgebildet ist, eine Energie zu steuern, die im Hauptschwingkreis strömt, wobei die zweite Impedanz (Z2), die an den zweiten Neutralpunkt (PN2) angeschlossen ist, dazu ausgebildet ist, Energie zu speichern und eine Umschaltung bei Nullspannung der Schalter der Ausgangsstrukturen zu ermöglichen.

6. Resonanz-Gleichspannungswandler (10-1) nach einem der vorhergehenden Ansprüche, wobei die elektronischen Elemente (L1, L2, L3, CR1, CR2, CR3) jedes Hauptresonanzkreises wenigstens ein erstes induktives Element (L1, L2, L3), eine mit dem ersten induktiven Element (L1, L2, L3) verbundene Resonanzkapazität (CR1, CR2, CR3) umfassen, die dazu ausgebildet sind, miteinander in Resonanz zu stehen.

## Claims

1. Resonant DC-DC voltage converter (10-1), in particular for an electric or hybrid vehicle, the converter (10-1) being configured to transfer electrical energy between a high-voltage electrical network of the vehicle and a low-voltage electrical network of the vehicle, the high-voltage electrical network and the low-voltage electrical network delivering a defined voltage between a high potential and a respective low potential of the high-voltage electrical network and of the low-voltage electrical network, said converter (10-1) comprising n interlaced main resonant circuits, n being a natural number greater than or equal to two,

each main resonant circuit being connected to an input structure including switches (Q1-Q6) that are configured to control energy flowing through the main resonant circuits, the switches (Q1-Q6) being arranged in n half bridges each comprising a high-side switch (Q1, Q3, Q5) and a low-side switch (Q2, Q4, Q6) that are linked at a centre tap, the high-side switch (Q1, Q3, Q5) being connected to the high potential of the high-voltage electrical network of the vehicle and the low-side switch (Q2, Q4, Q6) being connected to the low potential of the high-voltage electrical network of the vehicle,
each main resonant circuit being connected to an output structure including switches (Q7-Q12) that are configured to control energy flowing through the main resonant circuits, the switches (Q7-Q12) being arranged in n half bridges each comprising a high-side switch (Q7, Q9, Q11) and a low-side switch (Q8, Q10, Q12) that are linked at a centre tap, the high-side switch (Q7, Q9, Q11) being connected to the high potential of the low-voltage electrical network of the vehicle and the low-side switch (Q8, Q10, Q12) being connected to the low potential of the low-voltage electrical network of the vehicle, each main resonant circuit being connected to a half bridge of the input structure and to a half bridge of the output structure,
the converter being configured such that:

- the main resonant circuits each comprise a transformer and electronic elements (L1, L2, L3, CR1, CR2, CR3), the transformer of each main resonant circuit comprising at least one primary winding (P1, P2, P3) and at least one secondary winding (S1, S2, S3), and wherein a neutral point (PN1, PN2) is connected to a terminal of a winding of the transformer of each main resonant circuit,

the at least primary winding (P1, P2, P3) of the main resonant circuits being connected together at a first neutral point (PN1) that is different from a first earth (M1) corresponding to the low potential of the high-voltage electrical network,

the at least secondary winding (S1, S2, S3) of the main resonant circuits being connected together at a second neutral point (PN2) that is different from a second earth (M2) corresponding to the low potential of the low-voltage electrical network, the second neutral point (PN2) being different from the first neutral point (PN1),

- said first neutral point (PN1) being linked solely to the first earth (M1) of the converter directly and via only one first impedance (Z1) that is configured to store the energy necessary for switching switches of the resonant DC-DC converter to zero voltage, said first impedance (Z1) being different from said electronic elements of the main resonant circuits that are configured to resonate between said electronic elements,
- said second neutral point (PN2) being linked solely to the second earth (M2) of the converter directly and via only one second impedance (Z2) that is configured to store the energy necessary for switching switches (Q7-Q12) of the resonant DC-DC converter to zero voltage, said second impedance (Z2) being different from said electronic elements of the main resonant circuits that are configured to resonate between said electronic elements.

2. Converter according to Claim 1, wherein said impedances (Z1, Z2) comprise an inductor.

3. Converter (10-1) according to either one of Claims 1 and 2, wherein said impedances (Z1, Z2) participate in forming a subsidiary resonant circuit that is different from said main resonant circuits.

4. Converter (10-1) according to the preceding claim, wherein the main resonant circuits of the converter (10-1) are each linked to a respective input structure including at least one switch that is configured to control energy flowing through the main resonant circuit, the first impedance (Z1) connected to the first neutral point (PN1) being configured to store energy and make it possible to switch the switches of said input structures to zero voltage.

5. Converter (10-1) according to the preceding claim, wherein the main resonant circuits of the converter (10-1) are each linked to a respective output structure including at least one switch that is configured to control energy flowing through said main resonant circuit, the second impedance (Z2) connected to the second neutral point (PN2) being configured to store energy and make it possible to switch the switches of said output structures to zero voltage.

6. Resonant DC-DC voltage converter (10-1) according to one of the preceding claims, wherein said electronic elements (L1, L2, L3, CR1, CR2, CR3) of each main resonant circuit comprise at least one first inductive element (L1, L2, L3), a resonant capacitor (CR1, CR2, CR3) linked to said first inductive element (L1, L2, L3), said first inductive element and said resonant capacitor being configured to resonate between each other.

FIGURE 1

FIGURE 2

FIGURE 3          FIGURE 4          FIGURE 5

FIGURE 6

FIGURE 7

## RÉFÉRENCES CITÉES DANS LA DESCRIPTION

**Documents brevets cités dans la description**

- US 2014368175 A
- US 2012163035 A
- KR 101377124
- US 2012262953 A
- WO 2017049191 A
- US 5946206 A